# EUROPÄISCHE PATENTSCHRIFT

(11) **EP 3 526 519 B1**
(45) Veröffentlichungstag und Bekanntmachung des Hinweises auf die Patenterteilung: **24.02.2021**
(21) Anmeldenummer: 18701667.0
(22) Anmeldetag: 02.01.2018
(51) Int. Cl.: F23R 3/28, F23D 14/78, F23D 11/38

(54) **BRENNERSPITZE MIT EINEM LUFTKANALSYSTEM UND EINEM BRENNSTOFFKANALSYSTEM FÜR EINEN BRENNER UND VERFAHREN ZU DEREN HERSTELLUNG**
BURNER TIP COMPRISING AN AIR DUCT SYSTEM AND A FUEL CHANNEL SYSTEM FOR A BURNER AND METHOD FOR PRODUCTION THEREOF
POINTE DE BRÛLEUR COMPRENANT UN SYSTÈME DE CONDUIT D'AIR ET UN SYSTÈME DE CONDUIT DE COMBUSTIBLE POUR UN BRÛLEUR ET PROCÉDÉ DE FABRICATION ASSOCIÉ

(30) Priorität: 05.01.2017 DE 102017200106
(43) Veröffentlichungstag der Anmeldung: 21.08.2019
(73) Patentinhaber: Siemens Energy Global GmbH & Co. KG, 81739 München (DE)
(72) Erfinder: HOCKLEY, Carl, WR3 7QJ Worcester (GB); KIENER, Christoph, 81369 München (DE); KREUTZER, Andreas, 12621 Berlin - Hellersdorf (DE); SALCHER, Matthias, 81379 München (DE)
(86) Internationale Anmeldenummer: PCT/EP2018/050015
(87) Internationale Veröffentlichungsnummer: WO 2018/127471

(56) Entgegenhaltungen:
- EP-A1- 2 743 582
- EP-A1- 3 037 729
- EP-A2- 0 638 769
- DE-A1-102010 016 888
- DE-A1-102015 202 579
- DE-A1-102015 204 594
- JP-A- 2003 247 425

## Beschreibung

Die Erfindung betrifft eine Brennerspitze zum Einbau in einen Brenner, wobei die Brennerspitze ein zur Umgebung der Brennerspitze offenes Luftkanalsystem und ein zur Umgebung der Brennerspitze offenes Brennstoffkanalsystem aufweist. Dabei ist die Brennerspitze doppelwandig mit einer Innenwand und einer Außenwand und einem dazwischen liegenden Ringraum ausgeführt, wobei der Ringraum einen Teil des Luftkanalsystems bildet, d. h., dass das Luftkanalsystem durch den Ringraum führt, bevor es sich zur Umgebung der Brennerspitze öffnet. Damit weist die Brennerspitze an ihrer Oberfläche Öffnungen auf, die eine Verbindung des Luftkanalsystems und des Brennstoffkanalsystems mit der Umgebung der Brennerspitze schaffen. Die Umgebung der Brennerspitze wird dabei beispielsweise durch einen Brennraum gebildet, in dem durch das Brennstoffkanalsystem beförderter Brennstoff verbrannt wird. Dieser Brennraum kann beispielsweise in einer Gasturbine angeordnet sein.

Weiterhin betrifft die Erfindung ein Verfahren zum Herstellen einer Brennerspitze mit dem oben beschriebenen Aufbau.

Brennerspitzen der eingangs angegebenen Bauweise sind beispielsweise aus der EP 2 196 733 A1 bekannt. Die dort beschriebene Brennerspitze kann beispielsweise in einer Gasturbine zum Einsatz kommen, wobei die Brennerspitze das stromabwärts gelegene Ende einer Brennerlanze bildet, die in einem Hauptkanal für Verbrennungsluft angeordnet ist. Die Brennerspitze ist doppelwandig aufgebaut, wobei die Außenwand einen Hitzeschild bildet, der entstehende Verbrennungswärme von der Innenwand fernhalten soll. Daher ist zwischen der Außenwand und der Innenwand ein ringförmiger Hohlraum, also ein Ringraum, angeordnet, der zu Kühlungszwecken über Öffnungen mit Luft durchströmt werden kann. Der Hitzeschild muss bei der beschriebenen Ausführung darauf ausgelegt werden, die Wärmebeanspruchung aufgrund der in der nachgeschalteten Brennkammer ablaufenden Verbrennung zu ertragen. Daher stellt die Außenwand der Brennerspitze den limitierenden Faktor für die Lebensdauer der Brennerspitze dar.

Die DE 10 2010 016 888 A1 offenbart eine Brennstoffdüse für einen Gasturbinenbrenner, bei der die Brennstoffdüse einen Schutz gegen Flammenhaltung bereitstellt, und insbesondere eine solche Düse, die einen zerstörungsfreien Schutz vor Flammenhaltung bereitstellt. Die Düse erzeugt eine unterschiedliche Wärmeausdehnung zwischen Brennstoffkanäle ausbildenden Rohren, um somit ein zerstörungsfreies Ausblasen von Brennstoff während eines Flammenhaltezustandes zu ermöglichen. Nach Verlöschen des Flammenhaltezustandes kehrt die Düse zum normalen Betriebszustand zurück

Die JP2003247425 beschreibt eine Brennerspitze gemäß dem Oberbegriff des Anspruchs 1.

Die Aufgabe der Erfindung liegt darin, eine Brennerspitze der eingangs angegebenen Art derart weiterzubilden, dass sich eine Verbesserung der Lebensdauer des Bauteils ergibt. Außerdem ist es Aufgabe der Erfindung, ein Verfahren zur Herstellung einer solchen Brennerspitze anzugeben.

Diese Aufgabe wird mit der eingangs angegebenen Brennerspitze erfindungsgemäß dadurch gelöst, dass an der Außenwand Wärmeleitstrukturen angebracht sind, die in den Ringraum hineinragen. Diese Wärmeleitstrukturen vergrößern damit die für einen Wärmeübergang zur Verfügung stehende Oberfläche der Außenwand (auf der Seite des Ringraums) verglichen mit einer glatten Oberfläche. Als Außenwand soll im Zusammenhang mit dieser Erfindung die Struktur bezeichnet werden, die den Ringraum von der Umgebung der Brennerspitze trennt. Diese weist je eine nach außen und eine nach innen gerichtete Wandoberfläche auf. Genauso wird als Innenwand die Struktur verstanden, die den Ringraum von den inneren Strukturen der Brennerspitze (beispielsweise einem zentralen Luftkanal) trennt. Auch die Innenwand stellt eine Wandfläche zur Verfügung, die zum Ringraum zeigt, und eine dieser Wandfläche gegenüberliegende Wandfläche.

Die Wärmeleitstrukturen fahren im Vergleich zu einer glatten Wandfläche der Außenwand im Ringraum zu einer Oberflächenvergrößerung Die Oberflächenvergrößerung ermöglicht vorteilhaft einen schnelleren Wärmeübergang von der Außenwand in den Ringraum, wo diese Wärme von der strömenden Luft aufgenommen werden kann. Hierdurch lässt sich vorteilhaft ein verbesserter Kühlungseffekt erzielen, der zu einer geringeren thermischen Belastung der Außenwand führt. Dadurch ist es möglich, die thermischen Belastungen der Außenwand zu verringern und damit die Lebensdauer der Brennerspitze zu verlängern.

Erfindungsgemäß sind Wärmeleitstrukturen mit einer Geometrie, die die Außenwand und die Innenwand miteinander verbindet. Hierdurch ist es möglich, die Oberfläche für einen Wärmeübergang zusätzlich zu vergrößern, da die Wärme über die Wärmeleitstrukturen von der Außenwand auch in die Innenwand eingeleitet werden kann. Die Innenwand kann die Wärme vorteilhaft über die den Ringraum begrenzende Wandoberfläche an die Luft abgeben. Außerdem ist eine Wärmeableitung in die restliche Brennerspitze möglich, wobei diese sich dadurch gleichmäßiger erwärmt. Auf diesem Wege können Wärmespannungen zwischen der Innenwand und der Außenwand verringert werden, was zusätzlich vorteilhaft zu einer Verlängerung der Lebensdauer beiträgt.

Gemäß einer besonderen Ausgestaltung der Erfindung kann vorgesehen werden, dass die Wärmeleitstrukturen mit der Innenwand und der Außenwand in einem Stück ausgeführt sind. Hierdurch ist es vorteilhaft möglich, die Wärmeleitung zwischen den Wärmeleitstrukturen und der Innenwand zu verbessern, so dass der bereits beschriebene Effekt einer thermischen Entlastung der Außenwand vorteilhaft weiter erhöht wird. Außerdem entsteht auf diese Weise vorteilhaft ein mechanisch besonders stabiler Verband zwischen Außenwand und Innenwand.

Zum Herstellen wird erfindungsgemäß ein additives Herstellungsverfahren genutzt. wird. Hierbei können die Außenwand, die Wärmeleitstrukturen und die Innenwand in einem Stück hergestellt werden, wobei das additive Herstellen vorteilhaft auch geometrisch komplexe Konstruktionen mit vorteilhaft großer Oberfläche für einen Wärmeübergang ermöglicht.

Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt. Das Baumaterial ist vorzugsweise pulverförmig, wobei durch das additive Fertigungsverfahren das Material zur Herstellung des Bauteils unter Einbringung von Energie physikalisch verfestigt wird.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten des Bauteils umgewandelt, damit in der Fertigungsanlage die geeigneten Prozessschritte zur sukzessiven Herstellung des Bauteils ablaufen können. Die Daten werden dafür so aufbereitet, dass die geometrischen Daten für die jeweils herzustellenden Lagen (Slices) des Bauteils zur Verfügung stehen, was auch als Slicen bezeichnet wird.

Als Beispiele für das additive Fertigen können das selektive Lasersintern (auch SLS für Selective Laser Sintering), das Selektive Laserschmelzen (auch SLM für Selective Laser Melting), das Elektronenstrahlschmelzen (auch EBM für Electron Beam Melting), das Laserpulverauftragsschweißen (auch LMD für Laser Metal Deposition) oder das Kaltgasspritzen (auch GDCS für Gas Dynamic Cold Spray) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Beim LMD und GDCS werden die Pulverteilchen direkt der Oberfläche zugeführt, auf der ein Materialauftrag erfolgen soll. Beim LMD werden die Pulverpartikel durch einen Laser direkt in der Auftreffstelle auf der Oberfläche aufgeschmolzen und bilden dabei eine Lage des zu erzeugenden Bauteils. Beim GDCS werden die Pulverpartikel stark beschleunigt, so dass sie vorrangig aufgrund ihrer kinetischen Energie bei gleichzeitiger Verformung auf der Oberfläche des Bauteils haften bleiben.

GDCS und SLS haben das Merkmal gemeinsam, dass die Pulverteilchen bei diesen Verfahren nicht vollständig aufgeschmolzen werden. Dies ermöglicht unter anderem auch die Herstellung von porösen Strukturen, wenn Zwischenräume zwischen den Partikeln erhalten bleiben. Beim GDCS erfolgt ein Aufschmelzen höchstens im Randbereich der Pulverpartikel, die aufgrund der starken Verformung an ihrer Oberfläche anschmelzen können. Beim SLS wird bei Wahl der Sintertemperatur darauf geachtet, dass diese unterhalb der Schmelztemperatur der Pulverpartikel liegt. Demgegenüber liegt beim SLM, EBM und LMD der Energieeintrag betragsmäßig bewusst so hoch, dass die Pulverpartikel vollständig aufgeschmolzen werden.

Erfindungsgemäß sind die Wärmeleitstrukturen als säulenartige Verbindungsstege ausgebildet.

Diese Verbindungsstege können im Querschnitt rund, oval oder auch eckig ausgeführt sein. Der Querschnitt kann in seinem Verlauf von der Außenwand zur Innenwand auch veränderlich ausgeführt werden. Säulenartige Verbindungsstege bilden somit im Ringraum eine Art Säulenhalle aus, die einerseits eine hohe mechanische Stabilität gewährleistet und andererseits eine große Oberfläche für einen Wärmeübergang an die im Luftkanalsystem geführte Luft gewährleistet.

Erfindungsgemäß wird vorgesehen, dass im Inneren der Verbindungsstege Verbindungskanäle verlaufen, die mit ihrem einen Ende in den Ringraum münden und mit ihrem anderen Ende durch die Außenwand hindurchführen. Hierdurch entsteht eine zusätzliche Verbindung für die Luft, so dass die Verbindungskanäle auch als Teil des Luftkanalsystems aufzufassen sind. Die Luft wird damit über eine Vielzahl von Verbindungskanälen zur durch die äußere Wandfläche der Außenwand gebildete Oberfläche der Brennerspitze geführt und bildet dort einen schützenden Luftmantel um die Brennerspitze. Zwar ist die Luft nach dem Austritt aus den Verbindungskanälen durch die Aufnahme von Wärme der Außenwand bereits erwärmt, jedoch liegt das Temperaturniveau in der Umgebung der Brennerspitze während des Verbrennungsvorgangs höher, so dass durch den Luftmantel ein zusätzlicher Kühlungseffekt erzielt werden kann. Dieser Effekt kann gemäß einer anderen Ausgestaltung der Erfindung auch erreicht werden, wenn die Außenwand mit Durchlässen versehen ist die den Ringraum direkt mit der Umgebung der Brennerspitze verbinden und deshalb ebenfalls als Teil des Luftkanalsystems aufzufassen sind. Die Durchlässe können auch gemeinsam mit den bereits erwähnten Verbindungskanälen zum Einsatz kommen.

Vorteilhaft ist es, wenn zumindest ein Teil der Außenwand trichterförmig ausgebildet ist. Insbesondere ist eine konische Ausbildung möglich, jedoch sind auch gekrümmte Wandverläufe vorstellbar, die sich zur Brennerspitze hin verjüngen. Insbesondere, wenn Verbindungskanäle oder Durchlässe für die Luft in der Außenwand vorgesehen sind, verteilt sich die ausströmende Luft bei einer trichterförmigen, insbesondere konischen Außenkontur der Brennerspitze strömungsgünstig, um einen schützenden Luftmantel in der direkten Umgebung der Brennerspitze auszubilden.

Gemäß einer Ausgestaltung der Erfindung ist vorgesehen, dass auch zumindest ein Teil der der Außenwand gegenüberliegenden Innenwand trichterförmig, insbesondere konisch ausgebildet ist. Dies hat den Vorteil, dass der zwischen Innenwand und Außenwand liegende Ringraum eine gleichmäßige Durchströmung mit Luft ermöglicht und insbesondere auch die säulenartigen Verbindungsstege im Wesentlichen die gleiche Länge aufweisen und damit ein vergleichbares thermisches Verhalten besitzen. So kann sich die gesamte Brennerspitze vorteilhaft vergleichsweise gleichmäßig erwärmen.

Die als säulenartige Verbindungsstege ausgeführten Wärmeleitstrukturen können vorteilhaft an ihrer Verbindungsstelle mit der Außenwand senkrecht zu dieser ausgerichtet sein. Hierdurch lässt sich eine möglichst kurze Verbindung zwischen der Außenwand und der Innenwand erzeugen, um einen Teil der Wärme auch in die Innenwand einzuleiten.

Weiterhin können die Wärmeleitstrukturen in konzentrischen Kreisen in dem Ringraum angeordnet sein, wobei dies voraussetzt, dass der Ringraum in radialer Richtung genügend Bauraum zur Verfügung stellt. Durch die genannte Anordnung lässt sich vorteilhaft in dem Ringraum eine gleichmäßige Durchströmung mit der Luft erzeugen, deren Verlauf insbesondere zentralsymmetrisch ausgerichtet ist.

Gemäß einer weiterführenden Ausgestaltung der Erfindung ist vorgesehen, dass in der Brennerspitze ein zentraler Luftkanal, der Teil der Luftkanalstruktur ist, verläuft und dieser zentrale Luftkanal über Öffnungen mit dem Ringraum verbunden ist. Damit wird die Luft von dem zentralen Luftkanal über die Öffnungen, die ebenfalls Teil der Luftkanalstruktur sind, in den Ringraum eingeführt, wobei auch die Öffnungen am Umfang gleichmäßig verteilt werden können, um eine gleichmäßige Durchströmung des Ringraums mit Luft zu gewährleisten.

Gemäß einer weiteren Ausgestaltung der Erfindung kann vorgesehen werden, dass der zentrale Luftkanal zu einer zentralen Austrittsöffnung in der Brennerspitze führt. In diesem Kanal kann eine weitere Lanze mit einer Düsen angeordnet sein, in einer Weise, dass ein Luftspalt zwischen der Lanze und dem Luftkanal sowie auch der zentralen Austrittsöffnung verbleibt, so dass sich in dem Luftspalt ein Luftstrom bilden kann. Dieser Luftstrom bewirkt einen zusätzlichen thermischen Schutz der Brennerspitze und der Lanze, da die durch die zentrale Austrittsöffnung strömende Luft kühler ist als die in dem die Brennerspitze umgebenden Brennraum herrschenden Brenntemperaturen.

Vorteilhaft ist es außerdem, wenn durch den Ringraum eine Vielzahl von Brennstoffkanälen, die Teil des Brennstoffkanals sind, führt, wobei diese Brennstoffkanäle mit Brennstofföffnungen in der Außenwand verbunden sind. Diese Brennstofföffnungen können vorteilhaft gleichmäßig am Umfang der Brennerspitze verteilt sein, so dass der Brennstoff gleichmäßig in die strömende Luft eingeleitet und in dieser verteilt wird. Auch die thermische Belastung der Brennerspitze wird durch die folgende gleichmäßigere Verbrennung des Brennstoffs homogener ausfallen, wodurch asymmetrische thermische Belastungsspitzen vermieden werden.

Weiterhin ist es vorteilhaft, wenn die Brennstoffkanäle mit einem den zentralen Luftkanal umgebenden Ringkanal, der ebenfalls Teil des Brennstoffkanalsystems ist, in Verbindung stehen. Auf diese Weise kann der Brennstoff gleichmäßig allen Brennstoffkanälen zugeführt werden, damit ist auch die an den unterschiedlichen Brennstofföffnungen freigesetzte Menge an Brennstoff homogen. Der Vorteil liegt in einer gleichmäßigen Verbrennung des Brennstoffs und einer gleichmäßigen thermischen Belastung der Brennerspitze.

Weitere Einzelheiten der Erfindung werden nachfolgend anhand der Zeichnung beschrieben. Gleiche oder sich entsprechende Zeichnungselemente werden nur insoweit mehrfach erläutert, wie sich Unterschiede zwischen den einzelnen Figuren ergeben. Es zeigen:
- Figur 1: den schematischen Aufbau eines Brenners, in dem Ausführungsbeispiel der erfindungsgemäßen Brennerspitze eingebaut ist, im Schnitt,
- Figur 2: ein Ausführungsbeispiel der erfindungsgemäßen Brennerspitze im Schnitt,
- Figur 3: den Ausschnitt III-III gemäß Figur 2,
- Figur 4: ein anderes Ausführungsbeispiel der erfindungsgemäßen Brennerspitze im Schnitt und
- Figur 5: ein Ausführungsbeispiel des erfindungsgemäßen Verfahrens als Ausschnitt.

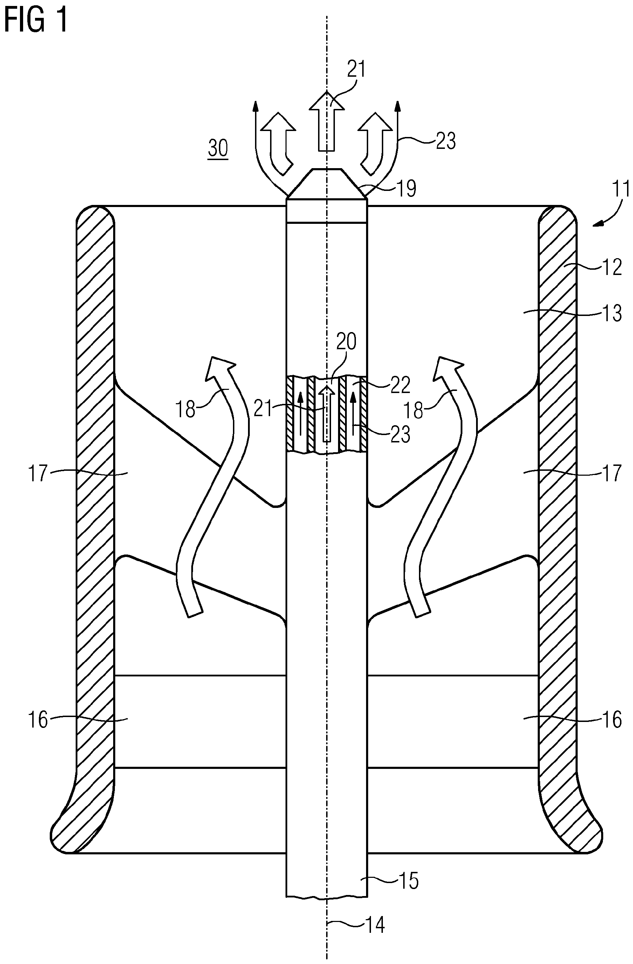

In Figur 1 ist ein Brenner 11 dargestellt, der einen Mantel 12 aufweist, in dem ein Hauptkanal 13 für Luft ausgebildet ist. Der Mantel 13 ist um eine Symmetrieachse 14 symmetrisch aufgebaut und weist im Zentrum des Hauptkanals 13 eine Brennerlanze 15 auf. Die Brennerlanze 15 ist mit Stegen 16 in dem Hauptkanal 13 fixiert. Außerdem erstrecken sich zwischen der Brennerlanze 15 und dem Mantel 12 Leitschaufeln 17, die der Luft einen Drall um die Symmetrieachse 14 aufprägen, wie den angedeuteten Luftpfeilen 18 zu entnehmen ist.

Die Brennerlanze 15 weist am stromabwärtigen Ende eine Brennerspitze 19 auf, wobei diese über einen zentralen Luftkanal 20 mit Luft 21 und über einen um den Luftkanal 20 herum angeordneten Ringkanal 22 mit einem Brennstoff 23 versorgt wird. Der Brennstoff 23 kann gasförmig oder flüssig sein. Die Luft 21 und der Brennstoff 23 wird über nicht näher dargestellte Öffnungen in der Brennerspitze ausgetrieben und so dem Luftstrom aus dem Hauptkanal 13 zugemischt. Dabei kühlt die Luft 21 die Brennerspitze 19 (hierzu im Folgenden noch mehr). Der Brenner 11 folgt dem Funktionsprinzip eines Pilotbrenners. Dieser kann beispielsweise in einen nicht näher dargestellten Brennraum einer Gasturbine eingebaut werden, wobei der Brennraum in diesem Fall eine Umgebung 30 der Brennerspitze bildet. In dem Luftkanal 21 kann noch eine Brennstofflanze (nicht dargestellt) zur Eindüsung eines anderen Brennstoffs angeordnet sein, durch die die Luft zum Austritt in die kegelförmige Außenfläche gedrängt wird.

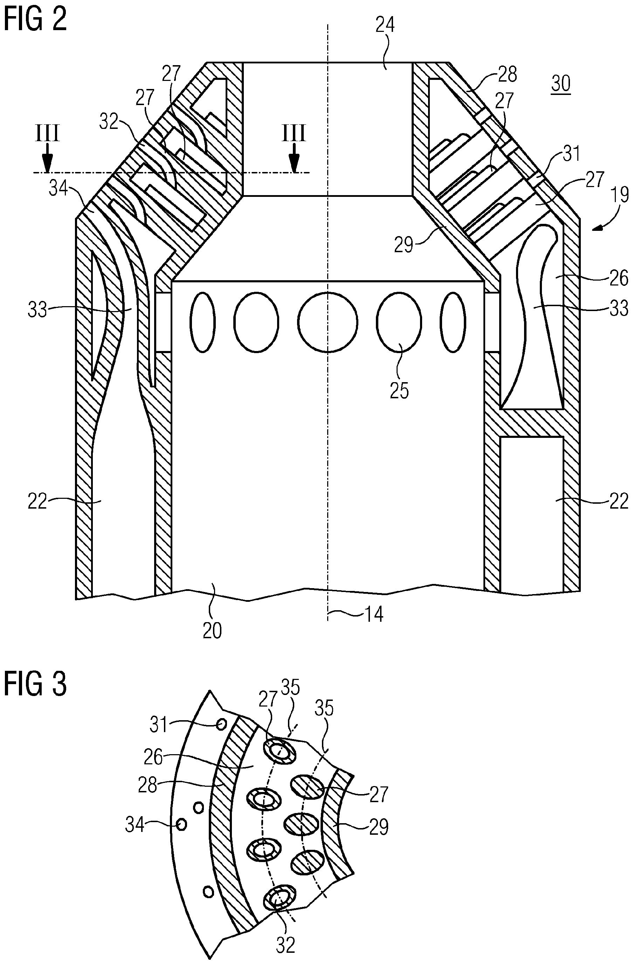

In Figur 2 ist die erfindungsgemäße Brennerspitze 19 im Schnitt dargestellt. Zu erkennen ist der entlang der Symmetrieachse 14 verlaufende zentrale Luftkanal 20, der zu einer Austrittsöffnung 24 an der Brennerspitze führt. Außerdem weist der Luftkanal 20 Öffnungen 25 in der Seitenwand auf, die den Luftkanal 20 mit einem den Luftkanal ringförmig umgebenden Ringraum 26 verbinden. Auf diesem Weg gelangt Luft auch in den Ringraum, der Teil der in der Brennerspitze 19 ausgebildeten Luftkanalstruktur ist.

In dem Ringraum strömt die Luft um Wärmeleitstrukturen 27 herum, wobei die Wärmeleitstrukturen als säulenartige Stege ausgebildet sind, die eine Außenwand 28 des Ringraums mit einer Innenwand 29 des Ringraums 26 verbinden. Die Außenwand 28 begrenzt den Ringraum 26 zur Umgebung 30 der Brennerspitze 19 und die Innenwand 29 begrenzt den Ringraum 26 zum zentralen Luftkanal 20. Die Öffnungen 25 befinden sich damit in der Innenwand 29.

Damit die Luft aus dem Ringraum 26 in die Umgebung 30 entweichen kann, sind in der Außenwand 28 Durchlässe 31 vorgesehen. Außerdem können die Wärmeleitstrukturen 27 in ihrem Inneren Verbindungskanäle 32 mit einer Öffnung aufweisen, durch die Luft im Inneren des Ringraums eintreten und in den Verbindungsstrukturen zur Umgebung 30 der Brennerspitze 19 geleitet werden kann. Hierdurch wird eine zusätzliche Oberflächenvergrößerung erreicht, damit die Wärme aus den Wärmeleitstrukturen 27 möglichst schnell an die Luft abgegeben werden kann. Durch die Vielzahl der Durchlässe und Verbindungskanäle an der äußeren Oberfläche entsteht an der Außenwand 28 ein kühlender Luftmantel, der den Wärmeübergang der Verbrennungswärme aus der Umgebung 30 verlangsamt. Um die Bildung dieses Luftmantels zu unterstützen, ist die Außenwand 28 in Form eines Konus ausgebildet. Auch die Innenwand 29 bildet einen Konus, so dass der Ringraum 26 in diesem Bereich eine konstante Höhe aufweist. Die Wärmeleitstrukturen 27 in Form von säulenartigen Stegen bilden somit eine konische Säulenhalle aus, wobei die Stege senkrecht zur Außenwand 28 und zur Innenwand 29 stehen. Die hinter der Zeichenebene liegenden Säulen sind in Figur 2 ebenfalls angedeutet.

Der Ringkanal 22 mündet in mehrere am Umfang verteilte Brennstoffkanäle 33. Diese leiten den flüssigen oder gasförmigen Brennstoff zu Brennstofföffnungen 34, die ebenfalls im konischen Bereich der Außenwand 28 angeordnet sind. Bei der Darstellung gemäß Figur 2 ist eine ungerade Anzahl von Brennstoffkanälen 33 vorgesehen, so dass diese nur auf einer Seite geschnitten dargestellt sind. Dies gilt im Übrigen auch für die Wärmeleitstrukturen 27.

Der Figur 3 kann man entnehmen, dass die Wärmeleitstrukturen 27 in dem Ringraum 26 auf gedachten konzentrischen Kreisen 35 angeordnet sind. Hierdurch ergibt sich eine strömungsgünstige Anordnung. Anders als in Figur 2 dargestellt, sind die Wärmeleitstrukturen 27 gemäß Figur 3 auf den konzentrischen Kreisen 35 versetzt angeordnet. Hierdurch wird die Luft im Ringraum öfter zu einem Richtungswechsel gezwungen und kann dadurch mehr Wärme von den Wärmeleitstrukturen 27 aufnehmen.

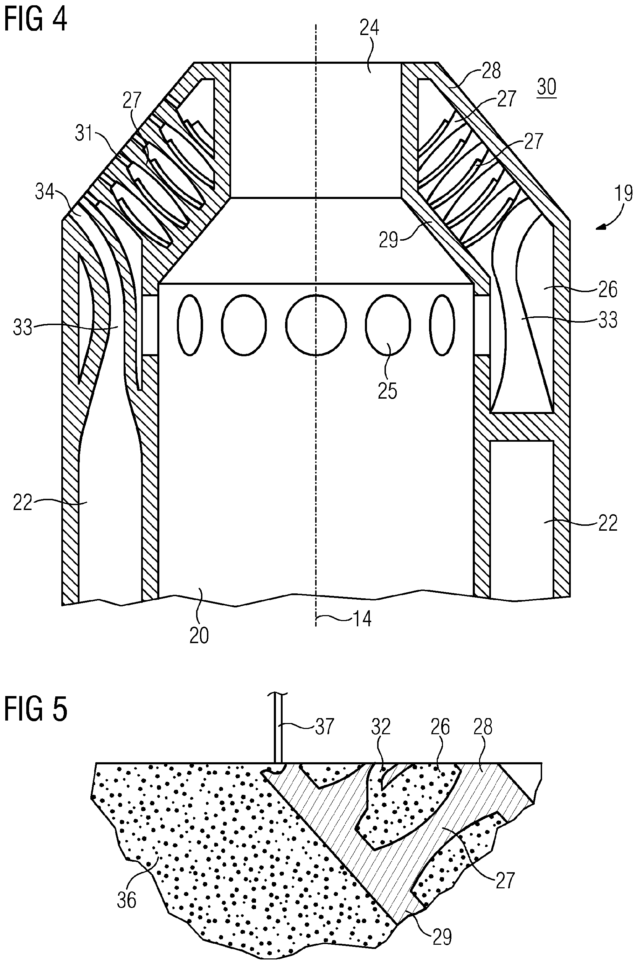

Die Brennerspitze 19 gemäß Figur 4 ist ähnlich aufgebaut wie die Brennerspitze 19 gemäß Figur 2. Im Folgenden sollen nur die Unterschiede erläutert werden. Die Wärmeleitstrukturen 27 sind ebenfalls als säulenartige Stege ausgeführt, die die Außenwand 28 mit der Innenwand 29 verbinden und in einem Stück mit diesen hergestellt sind. Allerdings sind die Wärmeleitstrukturen 27 schlanker ausgeführt und weisen keinen Verbindungskanal auf. Dafür ist eine größere Anzahl an Durchlässen 31 in der Außenwand vorgesehen, wodurch die Ausbildung eines geschlossenen Luftmantels außen an der Brennerspitze 19 unterstützt wird.

Die Verbindungsstrukturen stehen im Übrigen dichter als in Figur 2 und weisen keinen konstanten Querschnitt auf. Im Verlauf von der Außenwand 28 zur Innenwand 29 verjüngen sich die Wärmeleitstrukturen in ihrem Querschnitt zur Mitte des Ringraums 26 hin und erweitern sich dann wieder in Richtung zur Innenwand 29. Durch die Querschnittsverjüngung kann die Wärmeleitung von der Außenwand 28 zur Innenwand 29 hin beeinflusst werden. Außerdem kann durch die Verjüngung auch bei einer großen Anzahl von Wärmeleitstrukturen genügend Volumen für die strömende Luft zur Verfügung gestellt werden.

In Figur 5 ist ausschnitthaft dargestellt, wie ein Bauteil gemäß Figur 2 oder Figur 4 durch Laserschmelzen mit einem Laserstrahl 37 hergestellt werden kann. Dargestellt ist der Ausschnitt eines Pulverbetts 36, in dem gerade ein Teil der Außenwand 28, der Innenwand 29 und der Wärmeleitstrukturen 27 hergestellt wird. Die Wärmeleitstrukturen 27 sind als säulenartige Stege mit einem Querschnittsverlauf gemäß Figur 4 ausgeführt, wobei auch Verbindungskanäle 32 gemäß Figur 2 hergestellt werden. Nach der Herstellung der fertiggestellten Struktur muss das Pulver aus den in dem Ringraum 26 ausgebildeten Kavitäten, die das Luftkanalsystem ausbilden, entfernt werden. Dies kann durch Absaugen, Rütteln oder Ausblasen erfolgen.

## Patentansprüche

1. Brennerspitze zum Einbau in einen Brenner (11), wobei die Brennerspitze ein zur Umgebung der Brennerspitze offenes Luftkanalsystem und ein zur Umgebung der Brennerspitze offenes Brennstoffkanalsystem aufweist, wobei die Brennerspitze doppelwandig mit einer Innenwand (29) und einer Außenwand (28) und einem dazwischen liegenden Ringraum (26) ausgeführt ist und wobei der Ringraum (26) einen Teil des Luftkanalsystems bildet, wobei an der Außenwand (28) Wärmeleitstrukturen (27) angebracht sind, die in den Ringraum (26) hinein ragen, wobei die Wärmeleitstrukturen (27) die Außenwand (28) und die Innenwand (29) miteinander verbinden und aus säulenartigen Verbindungsstegen bestehen, wobei im Inneren der Verbindungsstege Verbindungskanäle (32) verlaufen, **dadurch gekennzeichnet, dass** die Verbindungskanäle (32) mit ihrem einen Ende in den Ringraum (26) münden und mit ihrem anderen Ende durch die Außenwand (28) hindurchführen.

2. Brennerspitze nach Anspruch 1,
**dadurch gekennzeichnet,**
**dass** die Wärmeleitstrukturen (27) mit der Innenwand (29) und der Außenwand (28) in einem Stück ausgeführt sind.

3. Brennerspitze nach einem der voranstehenden Ansprüche,
**dadurch gekennzeichnet,**
**dass** die Außenwand (28) mit Durchlässen (31) versehen ist.

4. Brennerspitze nach einem der voranstehenden Ansprüche,
**dadurch gekennzeichnet,**
**dass** zumindest ein Teil der Außenwand (28) trichterförmig ausgebildet ist.

5. Brennerspitze nach Anspruch 4,
**dadurch gekennzeichnet,**
**dass** auch zumindest ein Teil der der Außenwand (28) gegenüberliegenden Innenwand (29) trichterförmig ausgebildet ist.

6. Brennerspitze nach einem der Ansprüche 3 oder 5
**dadurch gekennzeichnet,**
**dass** die als säulenartige Verbindungsstege ausgeführten Wärmeleitstrukturen (27) an ihrer Verbindungsstelle mit der Außenwand (28) senkrecht zu dieser ausgerichtet sind.

7. Brennerspitze nach Anspruch 6,
**dadurch gekennzeichnet,**
**dass** die Wärmeleitstrukturen in konzentrischen Kreisen (35) in dem Ringraum (26) angeordnet sind.

8. Brennerspitze nach einem der voranstehenden Ansprüche,
**dadurch gekennzeichnet,**
**dass** in der Brennerspitze ein zentraler Luftkanal (20), der Teil der Luftkanalstruktur ist, verläuft und dieser zentrale Luftkanal (20) über Öffnungen (25) mit dem Ringraum (26) verbunden ist.

9. Brennerspitze nach Anspruch 8,
**dadurch gekennzeichnet,**
**dass** der zentrale Luftkanal (20) zu einer zentralen Austrittsöffnung (24) in der Brennerspitze führt.

10. Brennerspitze nach Anspruch 9,
**dadurch gekennzeichnet,**
**dass** durch den Ringraum (26) eine Vielzahl von Brennstoffkanälen (33), die Teil des Brennstoffkanalsystems sind, führt, die mit Brennstofföffnungen (34) in der Außenwand verbunden sind.

11. Brennerspitze nach Anspruch 10,
**dadurch gekennzeichnet,**
**dass** die Brennstoffkanäle (33) mit einem den zentralen Luftkanal (20) umgebenden Ringkanal (22), der Teil des Brennstoffkanalsystems ist, in Verbindung stehen.

12. Verfahren zum Herstellen einer nach einem der voranstehenden Ansprüche ausgeführten Brennerspitze,
**dadurch gekennzeichnet,**
**dass** zum Herstellen ein additives Herstellungsverfahren verwendet wird, bei dem die Außenwand (28), die Wärmeleitstrukturen (27) und die Innenwand (29) in einem Stück hergestellt werden.

## Claims

1. Burner tip for installing in a burner (11), wherein the burner tip has an air passage system which is open to the surrounding area of the burner tip and a fuel passage system which is open to the surrounding area of the burner tip, wherein the burner tip is of double-wall construction with an inner wall (29) and an outer wall (28) and an annulus (26) which lies therebetween and wherein the annulus (26) forms a part of the air passage system, wherein heat-conducting structures (27), which project into the annulus (26), are attached on the outer wall (28),
wherein
the heat-conducting structures (27) interconnect the outer wall (28) and the inner wall (29) and consist of pillar-like connecting ribs, wherein connecting passages (32) extend in the interior of the connecting ribs, **characterized in that** the connecting passages (32) open by their one end into the annulus (26) and by their other end pass through the outer wall (28).

2. Burner tip according to Claim 1,
**characterized in that**
the heat-conducting structures (27) are constructed in one piece with the inner wall (29) and the outer wall (28).

3. Burner tip according to either of the preceding claims,
**characterized in that**
the outer wall (28) is provided with openings (31).

4. Burner tip according to one of the preceding claims,
**characterized in that**
at least a part of the outer wall (28) is of funnel-shaped design.

5. Burner tip according to Claim 4,
**characterized in that**
at least a part of the inner wall (29) which lies opposite the outer wall (28) is also of funnel-shaped design.

6. Burner tip according to either of Claims 3 and 5,
**characterized in that**
the heat-conducting structures (27), which are constructed as pillar-like ribs, are oriented perpendicularly to the outer wall (28) at their connecting point to this.

7. Burner tip according to Claim 6,
**characterized in that**
the heat-conducting structures are arranged in the annulus (26) in concentric circles (35).

8. Burner tip according to one of the preceding claims,
**characterized in that**
a central air passage (20), which is part of the air passage structure, extends in the burner tip and this central air passage (20) is connected via openings (25) to the annulus (26).

9. Burner tip according to Claim 8,
**characterized in that**
the central air passage (20) leads to a central discharge orifice (24) in the burner tip.

10. Burner tip according to Claim 9,
**characterized in that**
a multiplicity of fuel passages (33), which are part of the fuel passage system, lead through the annulus (26) and are connected to fuel orifices (34) in the outer wall.

11. Burner tip according to Claim 10,
**characterized in that**
the fuel passages (33) are in communication with an annular passage (22) which encompasses the central air passage (20) and is part of the fuel passage system.

12. Method for producing a burner tip which is constructed according to one of the preceding claims,
**characterized in that**
an additive manufacturing process is used for the production, in which the outer wall (28), the heat-conducting structures (27) and the inner wall (29) are produced in one piece.

## Revendications

1. Pointe de brûleur à monter dans un brûleur (11), la pointe de brûleur ayant un système de canalisation d'air ouvert vers l'entour de la pointe du brûleur et un système de canalisation de combustible ouvert vers l'entour de la pointe du brûleur, la pointe du brûleur étant réalisée à double paroi, en ayant une paroi (29) intérieure et une paroi (28) extérieure et un espace (26) annulaire entre elles, l'espace (26) annulaire formant une partie du système de canalisation d'air, dans laquelle, sur la paroi (28) extérieure, sont mises des structures (27) de conduction de la chaleur, qui pénètrent dans l'espace (26) annulaire,
dans laquelle les structures (27) de conduction de la chaleur relient entre elles la paroi (28) extérieure et la paroi (29) intérieure et sont constituées d'entretoises de liaison de type en colonne, dans laquelle, à l'intérieur des entretoises de liaison s'étendent des conduits (32) de communication, **caractérisée en ce que** les conduits (32) de communication débouchent, par l'une de leur extrémité, dans l'espace (26) annulaire, et, par leur autre extrémité, traversent la paroi (28) extérieure.

2. Pointe de brûleur suivant la revendication 1,
**caractérisée**
**en ce que** les structures (27) conduisant la chaleur sont réalisées d'une pièce avec la paroi (29) intérieure et la paroi (28) extérieure.

3. Pointe de brûleur suivant l'une des revendications précédentes,
**caractérisée**
**en ce que** la paroi (28) extérieure est pourvue de traversées (31).

4. Pointe de brûleur suivant l'une des revendications précédentes,
**caractérisée**
**en ce qu'**au moins une partie de la paroi (28) extérieure est en forme d'entonnoir.

5. Pointe de brûleur suivant la revendication 4,
**caractérisée**
**en ce qu'**également au moins une partie de la paroi (29) intérieure, faisant face à la paroi (28) extérieure, est en forme d'entonnoir.

6. Pointe de brûleur suivant l'une des revendications 3 ou 5,
**caractérisée**
**en ce que** les structures (27) conductrices de la chaleur, réalisées sous la forme d'entretoises de liaison de type en colonne, sont, en leur point de liaison avec la paroi (28) extérieure, dirigées perpendiculairement à celle-ci.

7. Pointe de brûleur suivant la revendication 6,
**caractérisée**
**en ce que** les structures conductrices de la chaleur sont montées en cercles (35) concentriques dans l'espace (26) annulaire.

8. Pointe de brûleur suivant l'une des revendications précédentes,
**caractérisée**
**en ce que**, dans la pointe du brûleur, s'étend un conduit (20) central pour de l'air, qui fait partie de la structure de canalisation d'air, et ce conduit (20) central pour de l'air communique avec l'espace (26) annulaire par des ouvertures (25).

9. Pointe de brûleur suivant la revendication 8,
**caractérisée**
**en ce que** le conduit (20) central pour de l'air mène à une ouverture (24) centrale de sortie de la pointe du brûleur.

10. Pointe de brûleur suivant la revendication 9,
**caractérisée**
**en ce qu'**une pluralité de conduits (33) pour du combustible, qui font partie du système de canalisation de combustible et qui communiquent avec des ouvertures (34) pour du combustible dans la paroi extérieure, passent dans l'espace (26) annulaire.

11. Pointe de brûleur suivant la revendication 10,
**caractérisée**
**en ce que** les conduits (33) pour du combustible sont en communication avec un conduit (22) annulaire, qui entoure le conduit (20) central pour de l'air et qui fait partie du système de canalisation de combustible.

12. Procédé de fabrication d'une pointe de brûleur réalisée suivant l'une des revendications précédentes,
**caractérisé**
**en ce que** l'on utilise pour la fabrication un procédé de fabrication additif, dans lequel on fabrique d'une pièce la paroi (28) extérieure, les structures (27) conductrices de la chaleur et la paroi (29) intérieure.
